# EUROPEAN PATENT SPECIFICATION

(11) **EP 1 769 825 B1**
(45) Date of publication and mention of the grant of the patent: **04.03.2015**
(21) Application number: 06116502.3
(22) Date of filing: 03.07.2006
(51) Int. Cl.: A62C 3/10, A62C 3/16

(54) **Marine vessel**
Wasserfahrzeug
Navire

(30) Priority: 03.10.2005 FI 20055529
(43) Date of publication of application: 04.04.2007
(73) Proprietor: Wärtsilä Finland Oy, 65380 Vaasa (FI)
(72) Inventor: Levander, Oskar, FI-20900, Turku (FI)
(74) Representative: Berggren Oy Ab

(56) References cited:
- EP-A2- 1 072 290
- WO-A-95/02433
- DE-A1- 2 426 150
- DE-A1- 4 116 777
- US-A- 3 866 687

## Description

The present invention relates to a marine vessel with an engine room or machinery space, in which is located a marine fuel cell arrangement, which marine fuel cell arrangement comprises at least one fuel cell module providing a closed structure with respect to the surrounding engine room or machinery space according to the preamble of claim 1.

Engine rooms or machinery spaces of marine vessels, or other marine structures such as oil drilling platforms, LNG stations, etc., generally have to be provided with a fire extinguishing system. Typically this is a CO₂ system designed for the entirety of the engine room. Furthermore, so-called prime movers must have a local fire fighting system. In practice this usually means that water mist sprinklers are provided above the engines or other machinery equipment.

The CO₂ system is efficient as such, but it can not be employed before the entire engine room is evacuated, i.e. cleared from personnel. This most often means that there is a delay in releasing the CO₂, which increases the impact of the fire. In order to remedy such situations, local fire fighting systems as discussed above are required. The local sprinklers may then be deployed as soon as the fire is noticed.

DE 41 16 777 A1 discloses a so-called local protection system for protecting sensitive electric or electronic devices in a compartment with a dedicated high pressure bottle containing fire extinguishing medium. DE 24 26 150 A1 discloses fire extinguishing equipment for an enclosure for storing data devices US 6269763 A discloses a marine vessel according to the preamble of claim 1.

The above is relevant for more conventional arrangements. However, fuel cell arrangements are becoming more frequent. In case of a fire, deployment of the main CO₂ system for the engine room would result in undesired delay and increased damages for the fuel cell arrangement. Also the effect of CO₂ released in an engine room around the fuel cell arrangement would be inefficient. Moreover, conventional local fire fighting systems comprising water mist are not well suited for electrical components, since they would create risks of short circuiting and cause damage to the fuel cell arrangement.

An object of the present invention is to avoid the drawbacks of known solutions and to provide an effective and simple fire extinguishing system for a marine fuel cell arrangement. This object is attained by the present invention according to claim 1.

The basic idea of the invention is to apply a local fire extinguishing system within the marine fuel cell arrangement, which comprises at least one fuel cell module providing a closed structure with respect to a surrounding engine room or machinery space. Each fuel cell module is provided with at least one fire detection sensor and at least one internal nozzle for releasing a fire extinguishing medium into the fuel cell module. Primarily this offers a better fire fighting capability and a quick response, i.e. a possibility to start the fire fighting earlier with less damage to the equipment. This also lessens the risk of casualties. Particularly this offers the advantage to fight a small fire without any risk of additional damage in connection with a larger fire fighting process.

The fuel cell module normally comprises a number of separate components, whereby the fuel cell module advantageously may be provided with at least one auxiliary nozzle for releasing fire extinguishing medium to one or more of the separate components. Such components typically include a hot box, including a fuel cell stack, a fuel reformer, an electric inverter, power conditioning, a process gas heater, a control unit, etc. The benefit would be an increased fire extinguishing effect focused directly at the actual source of fire. The auxiliary nozzles may be effective in immediately extinguishing a tiny fire, without incapacitating the function of the fuel cell module in general.

Preferably the fuel cell module is located within a container structure, whereby e.g. the dimensioning and the control of the fire fighting system may be designed more exactly to increase efficiency, also with a benefit of cost effectiveness.

The fire detection sensor advantageously comprises a smoke detector and/or a heat detector, whereby also detection of gas fires would be sufficiently ensured.

The fire extinguishing medium nozzle and, if employed, auxiliary nozzle may be connected to a fire extinguishing medium supply comprising a dedicated container and/or a common supply network. This allows for utilising the general fire extinguishing medium on board the marine vessel, depending on the substance, and also utilising a specific fire fighting medium when desired.

Preferably the fire extinguishing medium comprises CO₂ which is both effective and generally available on board a marine vessel. CO₂ is also practical to use in the form of dedicated containers or bottles. In case the fuel cell arrangement comprises a MCFC (Molten Carbonate Fuel Cell) the CO₂ may be made available from the fuel recirculation process of the fuel cell process, which would reduce the need of an external supply of CO₂. As an alternative to CO₂ an inert gas, advantageously N₂, may also be used. These arrangements ensure an improved extinguishing effect, reduced damage as well as an elimination of risks of electric short circuiting.

Additionally, water mist may be utilised as a supplementary fire extinguishing medium for specific purposes, such as for cooling a hot box of a fuel cell module or for cooling the walls and roof of a fuel cell module, or of an enclosing container structure, from the outside.

The fire extinguishing medium nozzle and, if employed, the auxiliary nozzle, are advantageously provided with a manual and/or automatic release means.

For further security, the fire extinguishing system is advantageously provided with automatic shutdown of e.g. air inlets, fuel feed devices, exhaust outlets, and any other connections of the fuel cell module to the surrounding in order to limit any spreading of the fire and to close the fuel cell module from the outside.

In the following the present invention is described in more detail, by way of example only, with reference to the attached schematic drawings, in which
Fig. 1 shows a first embodiment of a fire extinguishing system according to the invention, and
Fig. 2 shows a second embodiment of a fire extinguishing system according to the invention.

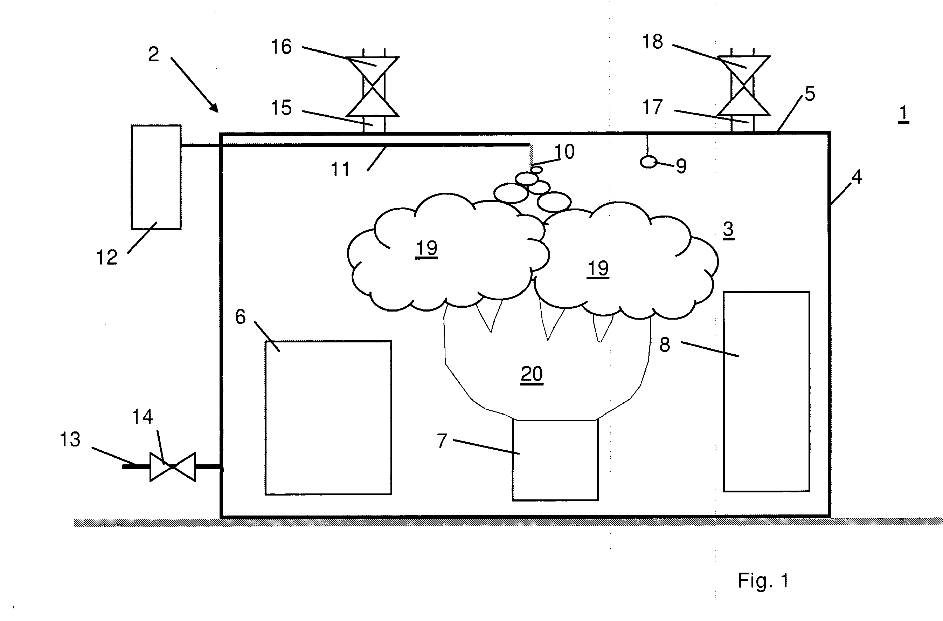

Fig. 1 shows a general view of a fuel cell arrangement in the form of a fuel cell module 2. The fuel cell module 2 is located in an engine room 1 of a marine vessel. In this embodiment the fuel cell module 2 is enclosed within a container structure 3 provided with side walls 4 and a roof 5. The fuel cell module 2 comprises a number of components. Fig. 1 only generally indicates some components as an example, i.e. a fuel cell stack 6, auxiliary equipment 7, including e.g. a fuel reformer, heat exchangers, pumps, etc. and a power conditioning apparatus 8, including e.g. an electric inverter and a transformer.

The fuel cell module is provided with a fire detection sensor 9 inside the module. The fire detection sensor 9 advantageously comprises a smoke detector and a heat detector in order to ensure the detection of gas fires. Furthermore, the fuel cell module 2 comprises an internal nozzle 10 for releasing a fire extinguishing medium into the fuel cell module. The fire detection sensor 9 and the internal nozzle 10 are located in the vicinity of the roof 5 of the container structure 3. The internal nozzle 10 is in fluid communication with a fire extinguishing medium supply 12 outside the container structure 3 by means of a pipe 11.

The fire extinguishing medium supply may be a dedicated container or bottle or alternatively a supply network onboard the marine vessel. This depends on the circumstances and the choice of fire extinguishing medium.

A preferable fire extinguishing medium is CO₂ which provides excellent fire extinguishing qualities, and in addition, is generally found onboard marine vessels since it is commonly used for fire fighting, particularly in engine rooms, on marine vessels. In the latter case there usually is a CO₂ supply network onboard, to which network the fire extinguishing medium supply pipe 11 may be connected. CO₂ may of course by supplied in dedicated containers or bottles as well, which are connected to said pipe.

An alternative fire extinguishing medium could be an inert gas, such as N₂.

The fuel cell module 2 is further provided with a fuel feed device 13 with a fuel shutdown vent 14, an exhaust outlet 15 with an exhaust shutdown vent 16 and an air inlet 17 with an inlet shutdown vent 18.

Basically the fuel cell module 2 thus provides a closed structure with respect to the surrounding engine room 1 where the fuel cell module 2 is located, except for means such as the above mentioned fuel feed device, exhaust outlet and air inlet, and possible other inlets and outlets to the engine room.

In the case of a fire in the fuel cell module 2, the fire detection sensor 9 reacts and may be programmed to immediately release a fire extinguishing medium from the fire extinguishing medium supply 12 through the pipe 11 to the internal nozzle 10, which then sprays the fire extinguishing medium, indicated by reference numeral 19, over the fire 20, which in Fig. 1 has started in the auxiliary equipment 7. The response is immediate and gives excellent fire damage control. By choosing a suitable fire extinguishing medium, any other damage to the pertinent component and any other components may be avoided.
The release may also be arranged to be manual, if so desired.

The signal to release the fire extinguishing medium is advantageously coupled to an automatic shutdown of the connections of the fuel cell module 2 to the surrounding. In this embodiment this would mean the automatic closing of the fuel shutdown vent 14 of the fuel feed device 13, the exhaust shutdown vent 16 of the exhaust outlet 15 and the air inlet shutdown vent 18 of the air inlet 17. These measures would ensure the isolation of the fire to the fuel cell module.

These kinds of control systems and shutdown arrangements are not discussed in detail in this connection, since they are known to a person skilled in the art.

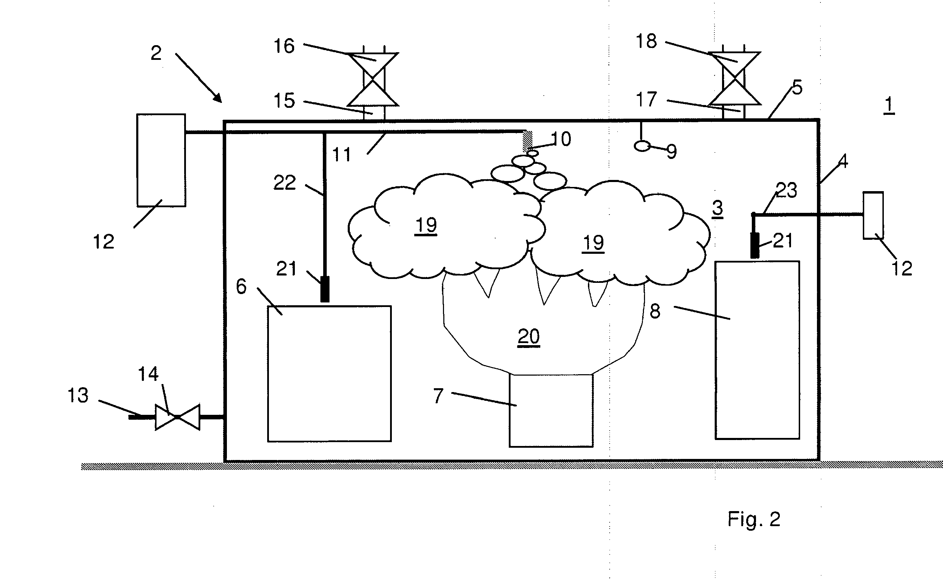

The embodiment according to Fig. 2 generally corresponds to the embodiment of Fig. 1, whereby the same reference numerals have been used for the corresponding parts, and are therefore not discussed in detail in connection with this embodiment.

In this embodiment, however, the fuel cell module 2 is provided with two auxiliary nozzles 21. One auxiliary nozzle 21 is located just above the fuel cell stack 6 and is in fluid communication with the fire extinguishing medium supply 12 through a branch line 22 connecting to the pipe 11. The other auxiliary nozzle 21 is located just above the power conditioning apparatus 8 and is in fluid communication with a fire extinguishing medium supply 12, in this case shown as a dedicated container or bottle, through an auxiliary pipe 23. The basic idea of this set up is to have a fire fighting system directly focused on one or more separate components.

The control and function of such auxiliary arrangements can generally be the same as discussed above. Furthermore, if desired, these arrangements could include dedicated fire detection sensors (not shown). The fuel cell module could also be provided only with such directly focused nozzles depending on its configuration.

In addition to the above, the fire extinguishing system according to the invention could have water mist as a supplementary fire extinguishing medium. In practice this could include water mist sprinklers (not shown) located at desired points, such as outside the sidewalls 4 and roof 5 of the container structure 3 for cooling purposes. Water mist sprinklers could also be located in connection with specific components. These supplementary arrangements should of course be designed so that the water would not cause thereto related damages, such as electric short circuiting.

In the description above, the present invention has been described only in relation to one fuel cell module. It is to be understood that engine rooms may comprise more than one, or even multiple fuel cell modules.

The drawings and the description related thereto are only intended for clarification of the basic idea of the invention. The invention may vary in detail within the scope of the ensuing claims.

## Claims

1. Marine vessel with an engine room or machinery space, in which is located a marine fuel cell arrangement, which marine fuel cell arrangement comprises at least one fuel cell module (2) providing a closed structure with respect to the surrounding engine room or machinery space, **characterised in that** the fuel cell module (2) is provided with at least one fire detection sensor (9) inside the module, and **in that** the fuel cell module (2) is provided with at least one internal nozzle (10) for releasing a fire extinguishing medium into the fuel cell module.

2. Marine vessel according to claim 1, **characterised in that** that the fuel cell module (2) comprises a number of separate components, and **in that** the fuel cell module (2) is provided with at least one auxiliary nozzle (21) for releasing fire extinguishing medium to one or more of the separate components.

3. Marine vessel according to claim 1, **characterised in that** the fuel cell module (2) is located within a container structure (3).

4. Marine vessel according to claim 1, **characterised in that** the fire detection sensor (9) comprises a smoke detector and/or a heat detector.

5. Marine vessel according to claim 1 or 2, **characterised in that** the internal nozzle (10) and, if employed, the auxiliary nozzle (21) is connected to a fire extinguishing medium supply (12) comprising a dedicated container and/or a supply network.

6. Marine vessel according to claim 5, **characterised in that** the fire extinguishing medium comprises CO₂ and/or an inert gas.

7. Marine vessel according to claim 6, **characterised in that** the inert gas comprises N₂.

8. Marine vessel according to claim 1, **characterised in that** water mist is arranged to be used as a supplementary fire extinguishing medium.

9. Marine vessel according to claim 1, **characterised in that** the internal nozzle (10) and, if employed, the auxiliary nozzle (21) is provided with a manual and/or automatic release means.

10. Marine vessel according to claim 1, **characterised in that** the fuel cell module (2) is provided with means for automatically shutting down e.g. fuel feed devices (13), exhaust outlets (15), and air inlets (17) of the fuel cell module.

## Patentansprüche

1. Seeschiff mit einem Motorraum oder Maschinenraum, in dem eine Schiffsbrennstoffzellen-Anordnung angeordnet ist, wobei die Schiffsbrennstoffzellen-Anordnung wenigstens ein Brennstoffzellenmodul (2) umfasst, das eine geschlossene Struktur in Bezug auf den umgebenden Motorraum oder Maschinenraum bereitstellt, **dadurch gekennzeichnet, dass** das Brennstoffzellenmodul (2) mit wenigstens einem Branderkennungssensor (9) innerhalb des Moduls versehen ist, und dadurch, dass das Brennstoffzellenmodul (2) mit wenigstens einer inneren Düse (10) zum Freisetzen eines Feuerlöschmediums in das Brennstoffzellenmodul versehen ist.

2. Seeschiff nach Anspruch 1, **dadurch gekennzeichnet, dass** das Brennstoffzellenmodul (2) eine Anzahl von gesonderten Bestandteilen umfasst, und dadurch, dass das Brennstoffzellenmodul (2) mit wenigstens einer Nebendüse (21) zum Freisetzen von Feuerlöschmedium in einen oder mehrere der gesonderten Bestandteile versehen ist.

3. Seeschiff nach Anspruch 1, **dadurch gekennzeichnet, dass** das Brennstoffzellenmodul (2) innerhalb einer Behälterstruktur (3) angeordnet ist.

4. Seeschiff nach Anspruch 1, **dadurch gekennzeichnet, dass** der Branderkennungssensor (9) einen Rauchdetektor und/oder einen Wärmedetektor umfasst.

5. Seeschiff nach Anspruch 1 oder 2, **dadurch gekennzeichnet, dass** die innere Düse (10) und, falls eingesetzt, die Nebendüse (21) mit einer Feuerlöschmedienversorgung (12) verbunden ist, die einem zweckbestimmten Behälter und/oder ein Versorgungsnetz umfasst.

6. Seeschiff nach Anspruch 5, **dadurch gekennzeichnet, dass** das Feuerlöschmedium CO₂ und/oder ein inertes Gas umfasst.

7. Seeschiff nach Anspruch 6, **dadurch gekennzeichnet, dass** das inerte Gas N₂ umfasst.

8. Seeschiff nach Anspruch 1, **dadurch gekennzeichnet, dass** Wassernebel dafür eingerichtet ist, als ein ergänzendes Feuerlöschmedium verwendet zu werden.

9. Seeschiff nach Anspruch 1, **dadurch gekennzeichnet, dass** die innere Düse (10) und, falls eingesetzt, die Nebendüse (21) mit einem manuellen und/oder einem automatischen Freigabemittel versehen ist.

10. Seeschiff nach Anspruch 1, **dadurch gekennzeichnet, dass** das Brennstoffzellenmodul (2) mit Mitteln zum automatischen Abschalten z.B. von Brennstoffzufuhreinrichtungen (13), Abgasauslässen (15) und Lufteinlässen (17) des Brennstoffzellenmoduls versehen ist.

## Revendications

1. Navire comprenant une salle des moteurs ou un espace des machines, dans laquelle/lequel est logé un agencement de pile à combustible marine, lequel agencement de pile à combustible marine comprend au moins un module de pile à combustible (2) fournissant une structure fermée par rapport à la salle des moteurs ou à l'espace des machines environnant(e), **caractérisé en ce que** le module de pile à combustible (2) est doté d'au moins un capteur de détection d'incendie (9) à l'intérieur du module, et **en ce que** le module de pile à combustible (2) est doté d'au moins une buse interne (10) pour libérer un agent extincteur d'incendie dans le module de pile à combustible.

2. Navire selon la revendication 1, **caractérisé en ce que** le module de pile à combustible (2) comprend des composants séparés, et **en ce que** le module de pile à combustible (2) est doté d'au moins une buse auxiliaire (21) pour libérer de l'agent extincteur d'incendie vers l'un ou plusieurs des composants séparés.

3. Navire selon la revendication 1, **caractérisé en ce que** le module de pile à combustible (2) est situé à l'intérieur d'une structure de conteneur (3).

4. Navire selon la revendication 1, **caractérisé en ce que** le capteur de détection d'incendie (9) comprend un détecteur de fumées et/ou un détecteur de chaleur.

5. Navire selon la revendication 1 ou 2, **caractérisé en ce que** la buse interne (10) et, si employée, la buse auxiliaire (21), est/sont reliée(s) à une alimentation en agent extincteur d'incendie (12) comprenant un récipient et/ou un réseau d'alimentation dédié.

6. Navire selon la revendication 5, **caractérisé en ce que** l'agent extincteur d'incendie comprend du CO₂ et/ou un gaz inerte.

7. Navire selon la revendication 6, **caractérisé en ce que** le gaz inerte comprend du N₂.

8. Navire selon la revendication 1, **caractérisé en ce qu'**un brouillard d'eau est agencé pour être utilisé en tant qu'agent extincteur d'incendie supplémentaire.

9. Navire selon la revendication 1, **caractérisé en ce que** la buse interne (10) et, si employée, la buse auxiliaire (21), est/sont dotée(s) d'un moyen de déclenchement manuel et/ou automatique.

10. Navire selon la revendication 1, **caractérisé en ce que** le module de pile à combustible (2) est doté de moyens pour fermer automatiquement des dispositifs d'alimentation en combustible (13), des ports de sortie (15) et des entrées d'air (17), par exemple, du module de pile à combustible.
